# EUROPEAN PATENT APPLICATION

(11) **EP 4 589 761 A1**
(43) Date of publication of application: **23.07.2025**
(21) Application number: 23912760.8
(22) Date of filing: 21.12.2023
(51) Int. Cl.: H01M 50/593, H01M 50/588, H01M 10/04, H01M 50/502, H01M 50/211, H01M 50/251, H01M 10/658, H01M 50/264, H01M 50/204

(54) **CELL MODULE ASSEMBLY AND BATTERY PACK INCLUDING SAME**

(30) Priority: 26.12.2022 KR 20220184465; 26.12.2022 KR 20220184466
(71) Applicant: LG Energy Solution, Ltd., Seoul 07335 (KR)
(72) Inventor: JEONG, Gyeongsu, Daejeon 34122 (KR); KIM, Kiyoun, Daejeon 34122 (KR); LEE, Dong Geun, Daejeon 34122 (KR); LEE, Seongju, Daejeon 34122 (KR); KIM, Minju, Daejeon 34122 (KR)
(74) Representative: Plasseraud IP
(86) International application number: PCT/KR2023/021194
(87) International publication number: WO 2024/144085

(57) **Abstract**

A cell module assembly according to an embodiment of the present disclosure comprises: a battery cell stack in which a plurality of battery cells are stacked; and a blocking member disposed between at least one of the plurality of battery cells and at least another one of them, wherein the blocking member includes a support plate, and the support plate includes a main body and a spacer coupled to the main body, and wherein the spacer has a higher melting point than the main body so as to maintain a shape and structure during a battery cell thermal event.

## Description

### [TECHNICAL FIELD]

### Cross Citation with Related Application(s)

This application claims the benefit of Korean Patent Application No. 10-2022-0184465 filed on December 26, 2022 and Korean Patent Application No. 10-2022-0184466 filed on December 26, 2022 in the Korean Intellectual Property Office, the disclosures of which are incorporated herein by reference in their entirety.

The present disclosure relates to a cell module assembly and a battery pack including the same, and more specifically, to a cell module assembly which includes a blocking member for preventing heat transfer between battery cells during a battery cell thermal event, and a battery pack including the same.

### [BACKGROUND]

Currently commercialized secondary batteries include a nickel cadmium battery, a nickel hydrogen battery, a nickel zinc battery, a lithium secondary battery, and the like. Among them, the lithium secondary battery has come into the spotlight because it has advantages, for example, hardly exhibiting memory effects compared to nickel-based secondary batteries and thus being freely charged and discharged, and having very low self-discharge rate and high energy density.

A lithium secondary battery generally uses lithium-based oxide and a carbon material as a positive electrode active material and a negative electrode active material respectively. The lithium secondary battery includes an electrode assembly in which a positive electrode plate and a negative electrode plate respectively coated with the positive electrode active material and the negative electrode active material are arranged with a separator interposed between them, and an exterior material or a battery case which hermetically houses the electrode assembly together with an electrolyte.

Depending on the shape of the exterior material, generally, a lithium secondary battery may be classified into a can type secondary battery where the electrode assembly is incorporated into a metal can and a pouch type battery where the electrode assembly is incorporated into a pouch of an aluminum laminate sheet.

Such secondary batteries are widely used not only in small-sized devices such as portable electronic devices, but also in medium- and large-sized devices such as electric vehicles and energy storage systems (ESS), and the frequency of the use thereof is rapidly increasing. Moreover, recently, the tendency of using home battery packs for storing electrical power is increasing.

There is a continuing need for a cell module assembly and a battery packs including the same, that ensures stability even when a thermal event occurs inside the battery cell.

### [DETAILED DESCRIPTION OF THE INVENTION]

### [Technical Problem]

Therefore, it is an object of the present disclosure to provide a cell module assembly which includes a blocking member for preventing heat transfer between battery cells during a battery cell thermal event, and a battery pack including the same. In addition, it is an object of the present disclosure to provide a method that can maximize the effects while reducing the production costs of a cell module assembly including a blocking member, and a battery pack including the same.

However, the technical problems to be solved by embodiments of the present disclosure are not limited to the above-mentioned problems, and other problems not mentioned herein can be clearly understood by those skilled in the art from the following description.

### [Technical Solution]

According to one embodiment of the present disclosure, there is provided a cell module assembly comprising: a battery cell stack in which a plurality of battery cells are stacked; and a blocking member disposed between at least one of the plurality of battery cells and at least another one of them, wherein the blocking member includes a support plate, and the support plate includes a main body and a spacer coupled to the main body, and wherein the spacer has a higher melting point than the main body so as to maintain a shape and structure during a battery cell thermal event.

The main body may be made of a plastic material, and the spacer may be made of a metal material.

The spacer has a frame structure, and the frame may include a plurality of subframes.

Each of the plurality of subframes has the same shape and structure, and may be disposed along a large area of the blocking member.

Each of the plurality of subframes may have a rectangular or square border shape so that the spacer has a lattice structure.

Each of the plurality of subframes may have a regular hexagonal border shape of the same size so that the spacer has a honeycomb structure.

The spacer may include a plurality of first bar members disposed along one direction, and a plurality of second bar members disposed so as to intersect with the first bar member.

The first bar member and the second bar member may be orthogonal to each other.

Each of the plurality of first bar members may be disposed so as to be spaced apart from each other at a first predetermined equal interval, and each of the plurality of second bar members may be disposed so as to be spaced apart from each other at a second predetermined equal interval.

The spacer may be manufactured by welding and joining the first bar member and the second bar member.

A plurality of the spacers are provided, and may be spaced apart by a predetermined distance along at least one direction of the support plate to form a dot array.

The spacer may have a circular or square plate shape.

The spacer may be manufactured integrally using a casting manufacturing method.

The spacer may be exposed to the outside on one or both sides of the outer surface of the support plate facing the battery cell, and one or both surfaces where the main body and the spacer are coupled may be flat without having a step.

The spacer may comprise a separation preventive part which is disposed inside the support plate, and the separation preventive part may have a convex shape which protrudes outward from the side surface or has a concave shape which recesses inward from the side surface.

The spacer is inserted inside the main body, and may not be exposed on the surface of the support plate.

The main body and the spacer may be manufactured integrally, and may be manufactured by placing the spacer and then injection-molding the main body.

The main body and the spacer are manufactured separately and assembled, and the main body comprises a pair of plate members, wherein the spacer is placed on one of the pair of plate members, and then the other one of the pair of plate members may be coupled.

The pair of plate members each constitute half of the main body, when viewed from a side end part of the support plate, and each of the pair of plate members is formed with a spacer mounting part, wherein the spacer mounting parts may be spaced apart from each other by a predetermined distance along at least one direction of the support plate to form spacer mounting parts arrayed in a dotted manner.

The spacer mounting part has an open shape, and the spacer is exposed to the outside of the support plate, the spacer mounting part has a mounting step on which a separation preventive part of the spacer is mounted around the opening, and the mounting step may be formed on a surface where each of a pair of plate members faces each other.

The spacer mounting part has a concave shape, and is formed on a surface where each of a pair of plate members faces each other, and the spacer may be inserted into the interior of the support plate.

Each of the pair of plate members has a coupling member on a side surface, a female type coupling member may be disposed on one of the pair of plate members, and a male type coupling member may be disposed on the other of the pair of plate members.

The coupling member may be hook-coupled.

Each of the pair of plate members has a guide member at a corner, a female type guide member may be disposed on one of the pair of plate members, and a male type guide member may be disposed on the other of the pair of plate members.

The female type guide member may be an L-shaped concave part formed along a corner of the plate member, and the male type guide member may be an L-shaped convex part formed along a corner of the plate member.

The blocking member may further comprise a pair of swelling pads each provided on both surfaces of the main body.

The blocking member is provided with a plurality of main bodies, and may further comprise swelling pads disposed between the main bodies.

The cell module assembly further comprises a pair of busbar housings that include openings through which electrode leads of the battery cells pass, and are disposed on both side surfaces of the battery cell stack; and a pair of end plates that respectively connect both ends of the pair of busbar housings.

According to another embodiment of the present disclosure, there is provided a battery pack comprising: one or more of the above-mentioned cell module assembly according to the present disclosure; and a pack case that houses the cell module assembly inside.

According to yet another embodiment of the present disclosure, there is provided an energy storage system comprising the above-mentioned battery pack according to the present disclosure.

### [Advantageous Effects]

According to an embodiment of the present disclosure, even if a thermal event occurs inside the battery pack, that is, if a problem such as thermal runaway or ignition occurs in some battery cells, this problem can be effectively prevented from being transferred to other battery cells.

In addition, the production cost of a cell module assembly including a blocking member and a battery pack including the same can also be reduced while maximizing the effects.

Further, according to an embodiment of the present disclosure, a battery pack having a simple structure and also having enhanced stability during a battery cell thermal event can be provided.

In addition, some other additional effects can be achieved by various embodiments of the present disclosure. Various effects obtainable from the present disclosure will be described in detail in respective embodiments, or the description of effects that can be easily understood by those skilled in the art will be omitted.

### [BRIEF DESCRIPTION OF THE DRAWINGS]

The accompanying drawings illustrate preferred embodiments of the present disclosure and, together with the following descriptions, serve to provide further understanding of the technical spirit of the present disclosure. However, the present disclosure is not to be construed as being limited to the drawings.
FIG. 1 is a perspective view of a cell module assembly (CMA) and a blocking member included in a battery pack according to an embodiment of the present disclosure.
FIG. 2 shows the cell module assembly and blocking member of FIG. 1 separately.
FIG. 3 is an enlarged perspective view of one embodiment of the blocking member of FIG. 1.
FIG. 4 is a top view of the blocking member of FIG. 3.
FIG. 5 shows one embodiment of a support plate and a spacer included in the blocking member of FIG. 3.
FIG. 6 shows only the spacer of FIG. 5.
FIG. 7 shows a modified embodiment of the spacer of FIG. 6.
FIG. 8 shows another modified embodiment of the spacer of FIG. 7.
FIG. 9 shows a modified embodiment of the support plate of FIG. 5.
FIG. 10 shows another modified embodiment of the spacer of FIGS. 5 to 9.
FIG. 11 is an enlarged perspective view of another embodiment of the blocking member along (or in parallel to) a large area of the main body 210 of the blocking member 200 of FIG. 1.
FIG. 12 shows one embodiment of a support plate and a spacer included in the blocking member of FIG. 11.
FIG. 13 shows a modified embodiment of the support plate and the spacer of FIG. 12.
FIG. 14 shows a modified embodiment of the support plate of FIG. 12.
FIG. 15 shows a modified embodiment of the support plate of FIG.13.
FIG. 16 shows a cross section along line A-A of the spacer of FIGS. 12 and 14.
FIG. 17 shows another modified embodiment of the spacer of FIGS. 12 and 14.
FIG. 18 shows another modified embodiment of the spacer of FIGS. 12 to 15.
FIG. 19 is an exploded perspective view of a battery pack according to an embodiment of the present disclosure.

### [DETAILED DESCRIPTION OF THE EMBODIMENTS]

Hereinafter, preferred embodiments of the present disclosure will be described in detail with reference to the accompanying drawings. Prior to description, it should be understood that terms and words used in the specification and the appended claims should not be construed as limited to general and dictionary meanings, but interpreted as having meanings and concepts corresponding to technical aspects of the present disclosure based on the principle that the inventor can properly define the concepts of the terms and words in order to describe his/her own invention as best as possible.

Therefore, the description proposed herein is just a preferable example for the purpose of illustrations only, and is not intended to limit the scope of the disclosure, so it will be apparent to those skilled in the art that other equivalents and modifications can be made thereto without departing from the spirit and scope of the invention.

A description of portions that are not related to the description will be omitted for clarity, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Meanwhile, the terms representing directions such as the upper side, the lower side, the left side, the right side, the front side, and the rear side have been used in the present embodiment, but it is obvious to those skilled in the art that the terms used are provided simply for convenience of description and may become different according to the position of an object, the position of an observer, or the like.

Further, throughout the description, when a portion is referred to as "including" or "comprising" a certain component, it means that the portion can further include other components, without excluding the other components, unless otherwise stated.

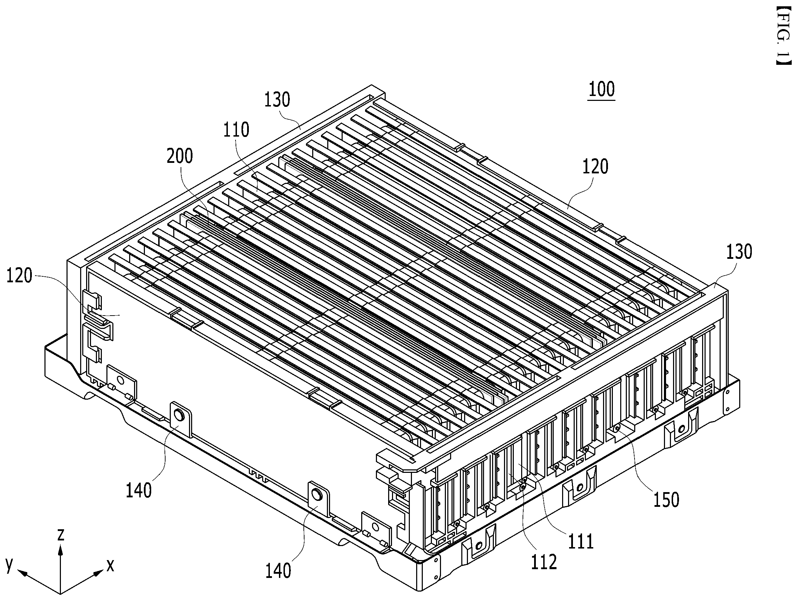

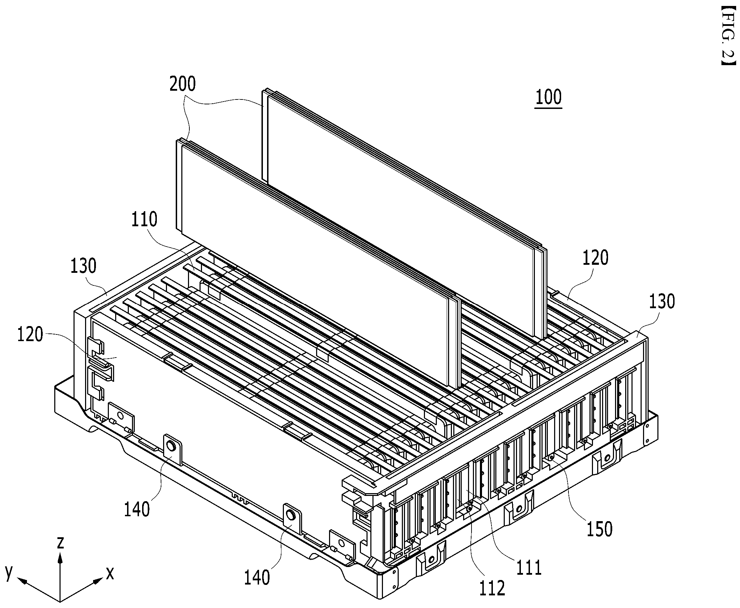

FIG. 1 is a perspective view of a cell module assembly (CMA) 100 and a blocking member 200 included in a battery pack according to an embodiment of the present disclosure. FIG. 2 shows the cell module assembly 100 and the blocking member 200 of FIG. 1 separately.

In the exemplary embodiments of FIGS. 1 and 2, a case where a plurality of battery cells 110 are connected in series in a battery cell stack is illustrated, but the present disclosure is not limited thereto, and various combinations are possible, such as being able to connect in parallel. A plurality of the battery cell stacks may also be provided in a predetermined number.

Also, referring to FIG. 1, a plurality of battery cells 110 are provided to form a battery cell stack. A blocking member 200 is disposed between at least one battery cell 110 and at least another one of them. That is, in some cases, the blocking member 200 may be disposed between the plurality of battery cells 110. The blocking member 200 is disposed on the side of the battery cell 110. In an exemplary embodiment of FIG. 1, a case where the blocking member 200 is disposed for every six battery cells 110 is illustrated as an example, but the present disclosure is not limited to those illustrated, and various modifications and changes are possible.

A pair of end plates 120 are respectively provided at the outermost two side ends of the plurality of battery cell stacks. The end plate 120 is disposed in a line and in parallel with the battery cell 110. Further, a pair of busbar housings 130 are disposed on the surface of the battery cell 110 toward which the electrode leads 111 and 112 face. In an exemplary embodiment of FIG. 1, a pair of busbar housings 130 are disposed. A pair of busbar housings 130 are disposed on both side surfaces of the stack of the plurality of battery cells 110. Each of the busbar housings 130 is disposed in a direction orthogonal to the longitudinal direction of the battery cell 110 (e.g., in the X-axis direction in the figure). Further, a pair of end plates 120 connect between both ends of the pair of busbar housings 130, respectively. In an exemplary embodiment of FIG. 1, the end plate 120 is disposed at the front and back surfaces of the battery cell 110 stack.

Each of the upper and lower sides between the pair of end plates 120 may include at least one strap 140 that connects between the pair of end plates 120. For convenience of explanation, illustration of the strap 140 connected to the upper side of the cell module assembly 100 is omitted in FIG. 1. The strap 140 strengthens the binding of the cell module assembly 100. More specifically, it strengthens the binding between the pair of end plates 120 and the stack of the plurality of battery cells 110 disposed therebetween. Accordingly, it is possible to prevent the stack of the plurality of battery cells 110 from being misaligned.

The end plate 120 may be made of a metal material as an example, and may be made of aluminum, iron, or stainless steel as an example. The busbar housing 130 may be made of a plastic material as an example, and may be manufactured by plastic injection molding.

The busbar housing 130 includes a plurality of openings in a portion facing the electrode leads 111 and 112. The electrode leads 111 and 112 of the battery cell 110 pass through the opening of the busbar housing 130, and are coupled to the busbar 150. When a plurality of battery cells 110 are connected in series, one of the electrode leads 111 and 112 that passes through an opening (not shown) of the busbar housing 130 on one side, and is coupled to the busbar 150 is a positive electrode lead, and the other is a negative electrode lead. Alternatively, when a plurality of battery cells 110 are connected in parallel, the electrode leads 111 and 112 that pass through the opening of the busbar housing 130 on one side and are coupled to the busbar 150 are configured such that both are positive electrode leads, or both are negative electrode leads.

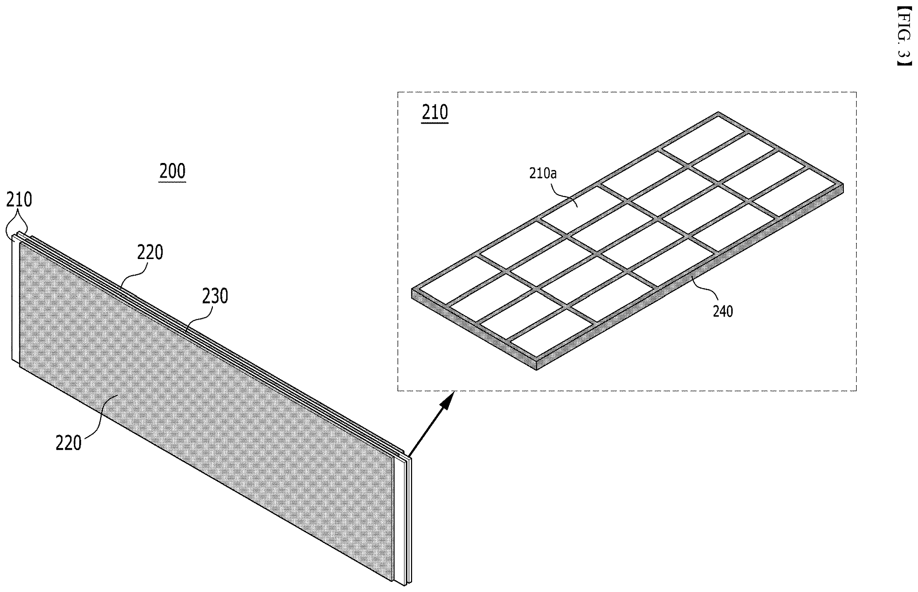

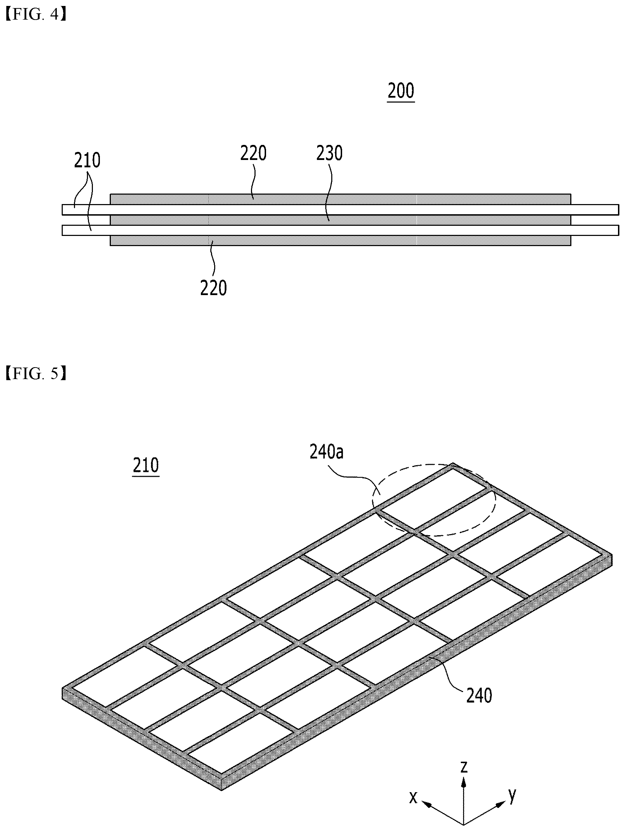

FIG. 3 is an enlarged perspective view of one embodiment of the blocking member 200 of FIG. 1, and FIG. 4 is a top view of the blocking member 200 of FIG. 3.

The blocking member 200 may be configured to be interposed between adjacent battery cells 110 to block heat. For example, when a thermal event occurs in some battery cells 110 and heat or high-temperature venting gas is generated, the generated heat or gas may be suppressed or blocked from being transferred to the adjacent battery cell 110 by the blocking member 200. Further, the blocking member 200 can perform the role of blocking flames, sparks or the like emitted from a specific battery cell 110.

The blocking member 200 has a substantially plate-shaped shape. The blocking member 200 may be configured in a plate-like shape erected in the vertical direction. Moreover, the blocking member 200 may also have the height equal to or similar to that of that of the battery cell 110 erected in the vertical direction. The height of the blocking member 200 may be smaller or larger than the height of the battery cell 110.

A plurality of blocking members 200 may be included in accordance with the number of battery cells. And, as described above, the blocking member 200 may constitute the cell module assembly 100 in a stacked form together with the battery cells 110.

According to the configuration of the embodiment of the present disclosure, in a battery pack including a plurality of battery cells 110, thermal runaway propagation between cells or the like can be effectively prevented by the blocking member 200.

The blocking member 200 includes a plate-shaped support plate 210. The support plate 210 has a structure in which a main body 210a and a spacer 240 are coupled. In more detail, the main body 210a and the spacer 240 are coupled to form a single plate-shaped support plate 210. The main body 210a may be made of a plastic material as an example. The plastic material may be made of, for example, PC (polycarbonate) or a mixture of PC and GF (glass fiber). For example, it may also be made of high-strength plastic such as reinforced plastic.

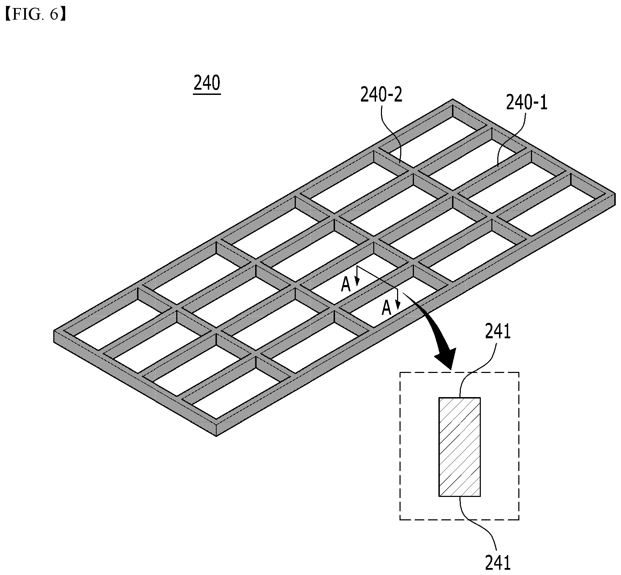

Further, the spacer 240 is coupled to the main body 210a. The spacer 240 has a frame structure when viewed as a whole. The spacer 240 has a structure in which a plurality of polygons are repeatedly arranged on the main body 210a along the large area (or in parallel to the large area) of the support plate 210 of the blocking member 200. The frame structure consists of a plurality of subframes 240a (see FIG. 5). The frame structure is a structure in which a plurality of first bar members 240-1 (see FIG. 6) arranged in parallel to each other in one direction, and a plurality of second bar members 240-2 (see FIG. 6) arranged in parallel to each other in different directions intersect with each other. In regard to the shape and structure of the spacer 240, refer to more detailed descriptions in FIGS. 5 to 10, which will be described later.

The spacer 240 may be made of a metal material as an example. The metal material may be, for example, aluminum, iron, stainless steel, or a combination thereof. The spacer 240 is made of a metal material, and can absorb heat generated in the battery cell 110 during a thermal event of the battery cell 110, thereby lowering the temperature of the battery cell 110. Further, since the spacer 240 maintains its shape and structure even at high temperatures, the separation distance between the battery cells 110 can be maintained by the spacer 240 even if the main body 210a is partially melted at high temperatures. The melting point of the spacer 240 is higher than the melting point of the main body 210a.

The outermost surface of the blocking member 200 includes a pair of swelling pads 220. A support plate 210 is disposed between a pair of swelling pads 220. The swelling pad 220 may be made of silicon, plastic, or a combination thereof. In the case of a plastic material, it may be, for example, made of a soft plastic. The swelling pad 220 may function as a buffer when the battery cell 110 swells.

As shown in FIGS. 3 and 4, the support plate 210 may be composed of two plates as an example. A swelling pad 230 may be further provided between the two support plates 210. That is, for example, it may have a five-layer structure of swelling pad 220 - support plate 210 - swelling pad 230 - support plate 210 - swelling pad 220. However, the present disclosure is not limited to those illustrated, and for example, various modifications and changes are possible, for example, it can also be manufactured in a triple structure of swelling pad 220 - support plate 210 - swelling pad 220.

The swelling pad 230 may be made of silicon, plastic, or a combination thereof. In the case of a plastic material, for example, it may be made of a soft plastic, for example, polyurethane foam (PU foam). In some cases, the swelling pad 230 may be made of the same material as the swelling pad 220.

Further, the length of the support plate 210 is equal to or greater than the length of the swelling pad 220 and/or the swelling pad 230. Both side ends of the swelling pad 220 and/or the support plate 210, which has greater rigidity than the swelling pad 230, may contact the busbar housing 130. Accordingly, as described above, the overall structure of the cell module assembly 100 can be maintained even from physical impact from the outside during welding pressure or during normal times.

FIG. 5 shows one embodiment of the main body 210a and the spacer 240 of the support plate 210 included in the blocking member 200 of FIG. 3. The spacer 240 of FIG. 5 has a structure in which a plurality of subframes 240a having a rectangular or square edge shape are coupled and the main body 210a is arranged in a line along the surface facing the battery cell 110. A plurality of subframes 240a having a rectangular or square edge shape are arranged in a line along the height direction (z-axis direction in FIG. 5) and the longitudinal direction (y-axis direction in FIG. 5) of the main body 210a.

The spacer 240 may be exposed on one or both surfaces of the support plate 210. It can be configured by a so-called 'exposure type'. That is, the thickness of the spacer 240 is equal to or smaller than the thickness of the main body 210a. FIG. 5 illustrates a case where the spacer 240 and the main body 210a have the same thickness, and the spacer 240 is exposed on both surfaces of the main body 210a.

Further, the main body 210a and the spacer 240 may be manufactured integrally. For example, the spacer 240 can be disposed first, and then the main body 210a can be manufactured by plastic injection molding.

Meanwhile, FIG. 5 illustrates a case where a plurality of subframes 240a have the same shape and size, but the present disclosure is not limited to those illustrated, and can also have different sizes or shapes.

FIG. 6 shows only the spacer 240 of FIG. 5. The spacer 240 includes a plurality of first bar members 240-1 arranged along one direction of the spacer 240, and a plurality of second bar members 240-2 arranged to intersect with the first bar member 240-1. In an exemplary embodiment of FIG. 6, the first bar member 240-1 and the second bar member 240-2 are orthogonal to each other. For example, the first bar member 240-1 is disposed in the longitudinal direction of the main body 210a, and the second bar member 240-2 is disposed in the height direction of the main body 210a.

The first bar members 240-1 may be disposed so as to be spaced apart from each other at equal intervals therebetween. In addition, the second bar members 240-2 may be disposed so as to be spaced apart from each other at equal intervals therebetween.

In manufacturing the spacer 240, the first bar member 240-1 and the second bar member 240-2 may be manufactured integrally using a casting manufacturing method. Alternatively, Various variations and changes are possible, for example a concave part is placed at each intersection of the first bar member 240-1 and the second bar member 240-2, they are assembled by a fitting coupling method between the concave part of the first bar member 240-1 and the concave part of the second bar member 240-2, and then the intersection portions of the first bar member 240-1 and the second bar member 240-2 may be made by a welding and joining method.

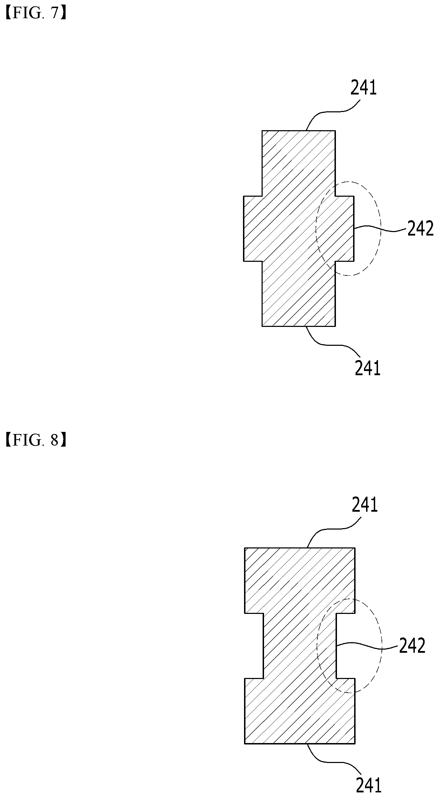

The enlarged view on the right in FIG. 6 illustrates an enlarged cross-sectional view taken along line A-A in FIG. 6. A case in which the side surfaces of the spacer 240 are formed evenly and the separation preventive part 242 (see FIG. 7) is not included is illustrated as an example.

Meanwhile, both surfaces 241 of the spacer 240 facing each other have a flat surface as a whole, and the surface on which both surfaces 241 of the spacer 240 extend coincides with both surfaces of the support plate 210 (see FIG. 5). That is, when the support plate 210 is viewed from the outside, the surface where the main body 210a and the spacer 240 are coupled has a flat surface as a whole without having a step. Accordingly, even when the support plate 210 is coupled with the swelling pad 220 and/or the swelling pad 230, the coupling property is increased. In addition, continuous protrusion of the soft swelling pad 220 due to unnecessary protrusion of the spacer 240 is prevented, so that when the blocking member 200 is disposed on the battery cell 110, it is possible to prevent the outer surface of the battery cell 110 from unevenly pressing.

FIG. 7 shows a modified embodiment of the spacer 240 of FIG. 6. For convenience of explanation, the enlarged cross-sectional view on the right side of FIG. 6 is illustrated in a modified form. The spacer 240 in FIG. 7 may further include a separation preventive part 242 in at least a portion so as to prevent the spacer 240 from separating from the main body 210a. For example, each subframe 240a (see FIG. 5) may include at least one separation preventive part 242. The first bar members 241 (see FIG. 6) facing each other in each subframe 240a may each include a separation preventive part 242. Alternatively, the second bar members 242 (see FIG. 6) facing each other may each include a separation preventive part 242.

The separation preventive part 242 may have a convex shape that protrudes from the side surface of the spacer 240 as shown in FIG. 7. Such a separation preventive part 242 is located inside the main body 210a, so that the spacer 240 and the main body 210a can remain fixedly coupled to each other even in the case of is a physical impact from the outside or in other cases
FIG. 8 shows another modified embodiment of the spacer 240 of FIG. 7. In an exemplary embodiment of FIG. 8, the separation preventive part 242 has a concave shape which recesses inward from the side surface of the spacer 240. In this case as well, since the injection-molded main body 210a is located in the space of the concave part of the separation preventive part 242, the coupling properties between the spacer 240 and the main body 210a is increased.

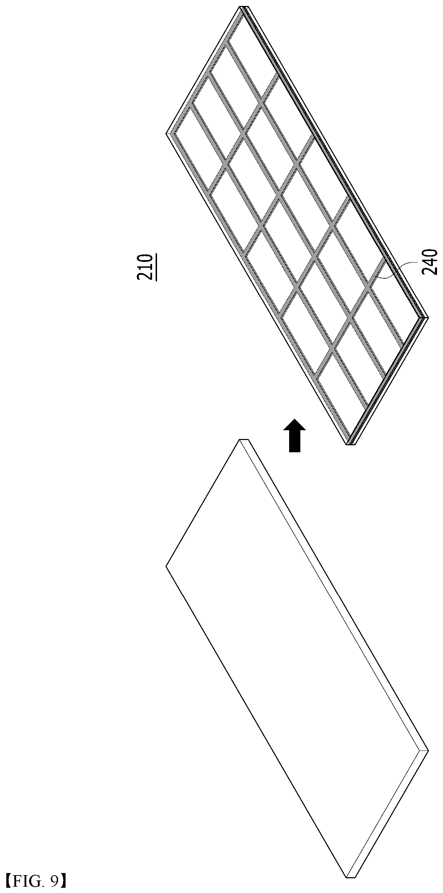

FIG. 9 shows a modified embodiment of the main body 210a of FIG. 5. Referring to FIG. 9, the spacer 240 is not exposed on both surfaces of the support plate 210, and the spacer 240 itself is inserted into the main body 210a. It can be configured as a so-called 'insertion type'. The picture on the left side of FIG. 9 is a perspective view seen from the outside, and the picture on the right side is a perspective view.

In the embodiment of FIG. 9, since the spacer 240 is inserted inside, it may not have a separation preventive part 242 similarly to the case of FIG. 5. That is, the spacer 240 can be made wholly uniform without having a step. Thereby, the manufacturing cost of the spacer 240 itself can be reduced. However, the present disclosure is not limited to those set forth above, and various variations and changes are possible, for example, the spacer 240 shown in FIG. 5 can be molded so as to be inserted into the main body 210a.

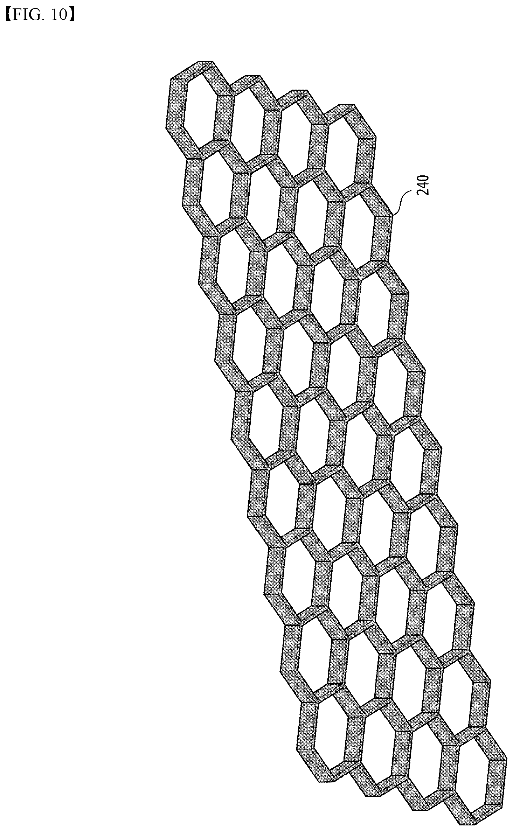

FIG. 10 shows another modified embodiment of the spacer 240 of FIGS. 5 to 9. The spacer 240 of FIG. 10 has a structure in which a plurality of subframes 240a having a regular hexagonal border shape are coupled, and arranged in a line along the large area of the support plate 210. Further, the spacer 240 of FIG. 10 may be manufactured to be exposed on one or both surfaces of the support plate 210, or may be manufactured to be inserted into the support plate 210. Further, the separation preventive part 242 of FIG. 7 or 8 may also be included. Since other matters related to the spacer 240 in FIG. 10 are redundant, refer to the contents described above in FIGS. 5 to 9.

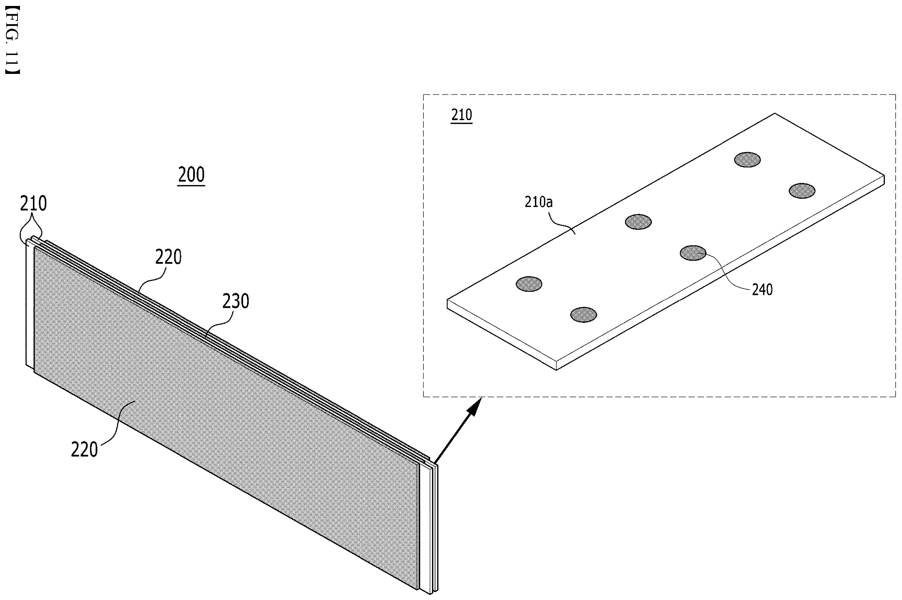

FIG. 11 is an enlarged perspective view of another embodiment of the blocking member 200 of FIG. 1.

The blocking member 200 includes a plate-shaped support plate 210. The support plate 210 has a structure in which a main body 210a and a spacer 240 are coupled. In more detail, the main body 210a and the spacer 240 are coupled to form a single plate-shaped support plate 210. The main body 210a may be made of a plastic material as an example. The plastic material may be made of, for example, PC (polycarbonate) or a mixture of PC and GF (glass fiber). For example, it may also be made of high-strength plastic such as reinforced plastic.

Further, a plurality of the spacers 240 are coupled to the main body 210a. When viewed as a whole, the plurality of spacers 240 may be arranged in a dotted manner along the large area of the support plate 210 of the blocking member 200 (or in parallel to the large area), and may be disposed so as to be spaced apart from each other. The plurality of spacers 240 may be disposed along at least one direction of the main body 210a. For example, in an exemplary embodiment of FIG. 11, a plurality of the spacers 240 may be respectively disposed along the longitudinal direction and the height direction of the main body 210a. Further, the plurality of spacers 240 may be disposed in a line, or may be disposed in a zigzag manner. The plurality of spacers 240 may be disposed at equal intervals when viewed in at least one direction. However, the present disclosure is not limited to those set forth above, and various modifications and changes are possible.

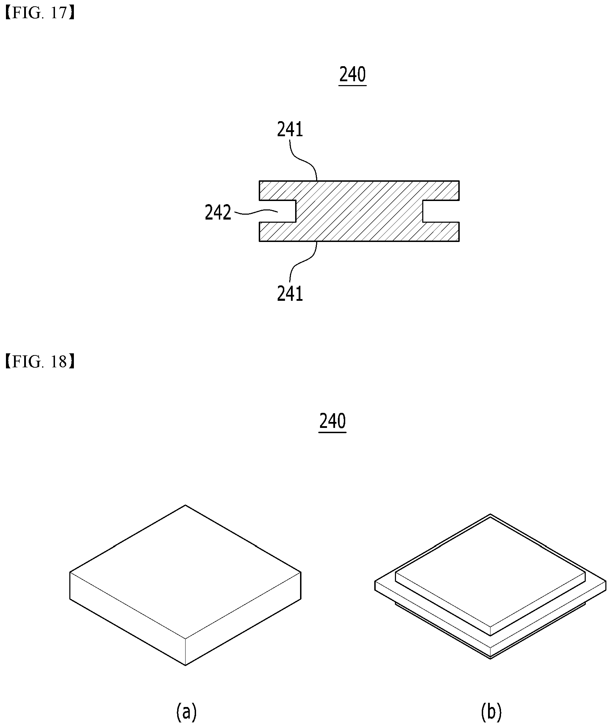

Meanwhile, the spacer 240 may have, for example, a circular plate, namely, a coin shape as shown in FIG. 11. However, the present disclosure is not limited thereto, and various modifications and changes are possible, for example, it may be a square plate (see FIG. 18). The spacer 240 may be made of a metal material as an example. The metal material may be, for example, aluminum, iron, stainless steel, or a combination thereof.

The spacer 240 is made of a metal material, and can absorb heat generated from the battery cell 110 during a thermal event of the battery cell 110 to lower the temperature of the battery cell 110. In addition, the spacer 240 maintains its shape and structure even at high temperatures, and therefore, the separation distance between the battery cells 110 can be maintained by the spacer 240 even if the main body 210a is partially melted at high temperatures.

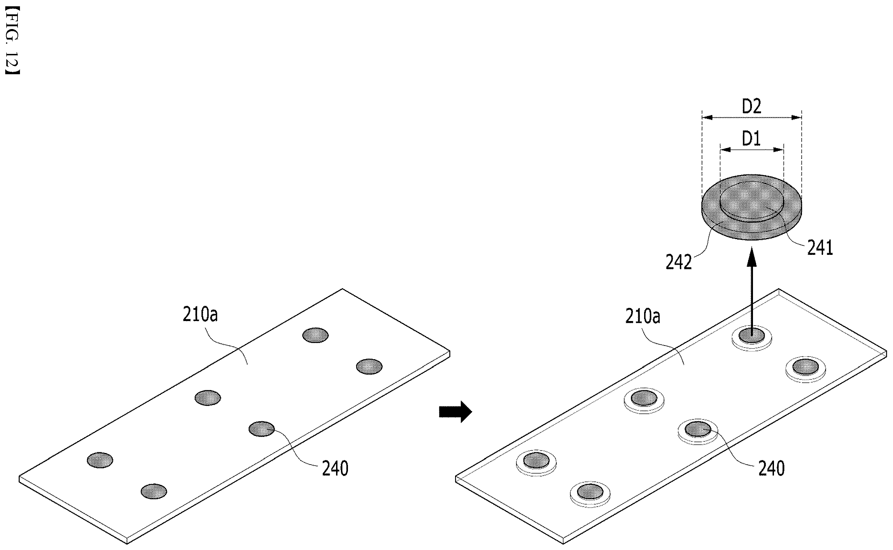

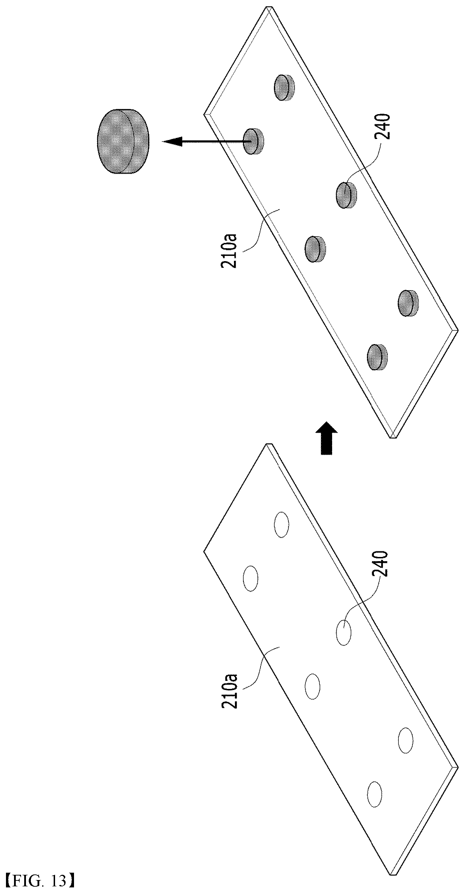

FIG. 12 shows one embodiment of a main body 210a and a spacer 240 included in the blocking member 200 of FIG. 11. FIG. 13 shows a modified embodiment of the main body 210a and the spacer 240 of FIG. 12. The left side of FIGS. 12 and 13 shows a view from the outside, and the right side shows a perspective view.

First, the embodiments of FIGS. 12 and 13 show a case where the main body 210a and the spacer 240 can be manufactured as a so-called 'integral type'. For example, a plurality of the spacers 240 can be disposed so as to be spaced apart from each other in a dotted manner, and then the main body 210a can be manufactured by a plastic injection molding method. The thickness of the spacer 240 is equal to or smaller than the thickness of the main body 210a.

Further, referring to FIG. 12, the spacer 240 is exposed on one or both surfaces of the support plate 210. It can be configured as a so-called 'exposure type'.

Meanwhile, the spacer 240 may further include a separation preventive part 242 so as to prevent the spacer 240 from being separated from the main body 210a. The separation preventive part 242 protrudes from the side surface of the spacer 240, and may have a lower step than the both surfaces 241 of the spacer 240. For example, when the spacer 240 is circular, the diameter D2 of the separation preventive part 242 may be larger than the diameter D1 of the spacer 240. Such a separation preventive part 242 is located inside the main body 210a, so that the spacer 240 can be fixedly coupled to the main body 210a as it is even in the case of physical impact from the outside or in other cases. For reference, although not shown in FIG. 12 regarding the exposed surfaces 241 of the spacer 240, the rear surface has the same shape as the front surface shown in the perspective view of FIG. 12.

Further, both surfaces 241 of the spacer 240 have flat surfaces as a whole, and the surface on which both surface 241 of the spacer 240 extend coincides with both surfaces of the main body 210a. That is, when the support plate 210 is viewed from the outside, the surface where the main body 210a and the spacer 240 are coupled has a flat surface as a whole, without having a step. Thereby, even when the support plate 210 is coupled with the swelling pad 220 and/or the swelling pad 230, the coupling property is increased. In addition, continuous protrusion of the soft swelling pad 220 due to unnecessary protrusion of the spacer 240 is prevented, so that when the blocking member 200 is disposed on the battery cell 110, it is possible to prevent the outer surface of the battery cell 110 from unevenly pressing.

The shape and structure of the separation preventive part 242 do not necessarily have to be circular, as illustrated in the present disclosure, and it is sufficient if the separation preventive part 242 can be located inside the main body 210a by protruding from the side surface of the spacer 240 and having a step lower than both surfaces 241 of the spacer 240.

Referring to FIG. 13, the spacer 240 is not exposed on both surfaces of the support plate 210, and the spacer 240 itself is inserted into the main body 210a. It can be configured as a so-called 'insertion type'. As mentioned above, the picture on the left shows the case when viewed from the outside, and the portion indicated by the spacer 240 is only illustrated for reference, and when viewed from the actual outside, only the overall flat main body 210a is visible, and the spacer 240 is located inside and thus is not visible.

In the embodiment of FIG. 13, the spacer 240 is inserted inside, and therefore may not have the separation preventive part 242 as in the case of FIG. 12. That is, the side surface of the spacer 240 can be made uniform as a whole without having a step. Thereby, the manufacturing cost of the spacer 240 itself can be reduced. However, the present disclosure is not limited to those set forth above, and various variations and changes are possible, for example, the spacer 240 shown in FIG. 12 may also be molded to be inserted into the main body 210a.

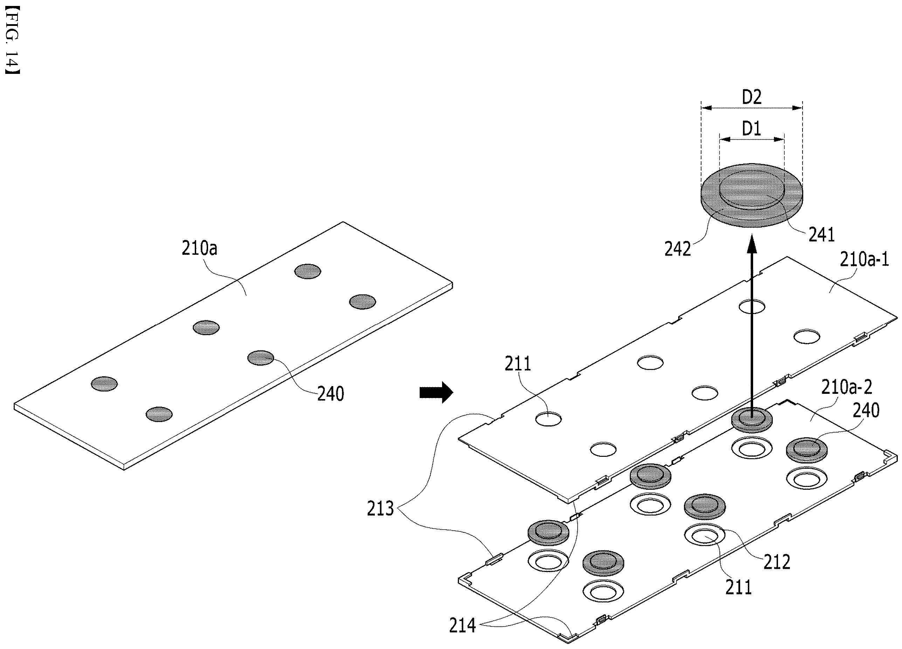

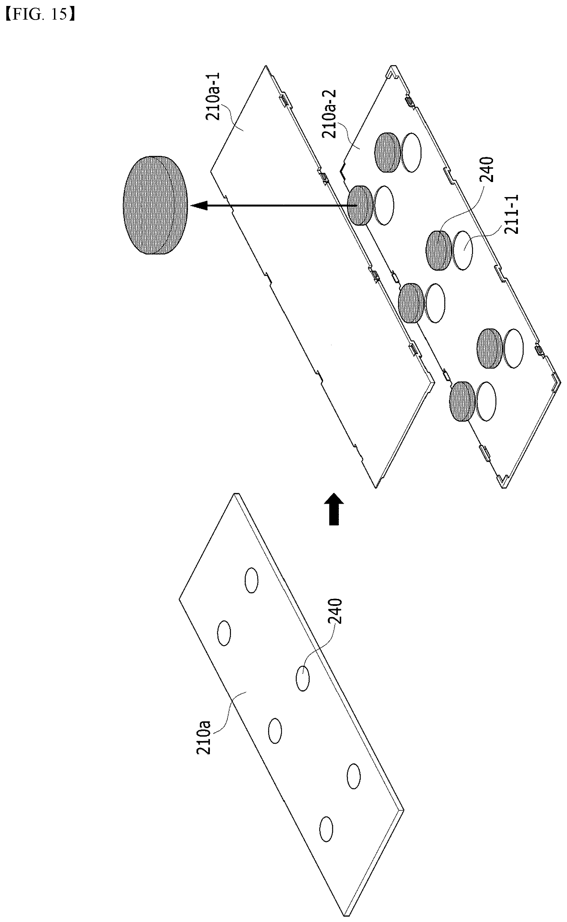

FIG. 14 shows a modified embodiment of the main body 210a of FIG. 12. FIG. 15 shows a modified embodiment of the main body 210a of FIG. 13. The left side of FIGS. 14 and 15 illustrates a view from the outside, and the right side illustrates an exploded perspective view.

First, the embodiments of FIGS. 14 and 15 illustrate a case in which the main body 210a and the spacer 240 can be manufactured in a so-called 'assembled type' manner in which the main body 210a and the spacer 240 are assembled and coupled. When the main body 210a is viewed from the side surface (i.e., when viewed from the side end part of the main body 210a, based on the plane disposed in the longitudinal direction of the support plate), it is manufactured using a pair of plate members 210a-1 and 210a-2 forming each half. That is, the pair of plate members 210a-1 and 210a-2 are parallel to both surfaces of the main body 210a facing the battery cell 110, and are reduced to half with reference to a plane sandwiching the two surfaces. It is manufactured by placing the spacer 240 on the spacer mounting parts 211 and 211-1 of one member of the pair of plate members 210a-1 and 210a-2, and coupling another member of the pair of plate members 210a-1 and 210a-2.

A pair of plate members 210a-1 and 210a-2 are also arranged such that the plurality of spacer mounting parts 211 and 211-1 are separated from each other in a dotted manner, and a spacer 240 is mounted on each of the spacer mounting parts 211.

Referring to FIG. 14, the spacer 240 is exposed on one or both surfaces of the support plate 210 similarly to the case of FIG. 12. It can be configured as a so-called 'exposure type'.

The spacer mounting part 211 has an opening shape so that the spacer 240 is exposed. In addition, in order to ensure that the spacer 240 is not separated from the main body 210a, that is, is not separated from the opening-shaped spacer mounting part 211, it may further comprise a separation preventive part 242 similarly to the case of FIG. 12. In addition, the spacer mounting part 211 of the main body 210a includes a mounting step 212 that corresponds (matches) to the shape of the separation preventive part 242 so that the separation preventive part 242 can also be mounted. The mounting step 212 is formed on surfaces of the pair of plate members 210a-1 and 210a-2 facing each other (surfaces disposed inside the main body 210a). Since the description of the spacer 240 including the other separation preventive part 242 is redundant, refer to those described above with reference to FIG. 12.

On the other hand, the pair of plate members 210a-1 and 210a-2 may be further provided with a coupling member 213 provided on the side surface (side end) of the pair of plate members 210a-1 and 210a-2. The coupling member 213 may be composed of a plurality of members. The coupling member 213 consists of a set of a female type coupling member and a male type coupling member. The exemplary embodiment of FIG. 14 illustrates a hook coupling. In other words, it illustrates the case of having a hooking ring and a hooking metal structure. Alternatively, in another exemplary embodiment, one has a concave part, and the other has a convex part that matches or corresponds thereto, wherein the convex part may be aligned and coupled to the concave part. However, the present disclosure is not limited to those illustrated or described above, and is sufficient if it is a structure that can connect and fix the pair of plate members 210a-1 and 210a-2 to each other. Alternatively, various modifications and changes are possible, for example, it can be coupled between the pair of plate members 210a-1 and 210a-2 with an adhesive or the like.

Further, the pair of plate members 210a-1 and 210a-2 may further include guide members 214 provided at the corners of the pair of plate members 210a-1 and 210a-2. The guide members 214 may be composed of a plurality of members. The guide member 214 consists of a set of a female type coupling member and a male type coupling member. For example, one may have a concave part, and the other may have a convex part having a shape that matches or corresponds thereto. The exemplary embodiment of FIG. 14 illustrates an L-shaped concave part and an L-shaped convex part formed along the corner. However, the present disclosure is not limited to those illustrated, and it is sufficient to have a structure in which a pair of plate members 210a-1 and 210a-2 can be guided so that they can be aligned with each other at the corners.

Even in the embodiment of FIG. 14, both surfaces 241 of the spacer 240 have a flat surfaces as a whole, and the plane on which both surfaces 241 of the spacer 240 extend coincides with both surfaces of the main body 210a. Since other details are redundant, refer to those described above with reference to FIG. 12.

Referring to FIG. 15, the spacer 240 is not exposed on both surfaces of the support plate 210, and the spacer 240 itself is inserted into the main body 210a. It can be configured as a so-called 'insertion type'. As mentioned above, the picture on the left side illustrates the case when viewed from the outside, and the portion indicated by the spacer 240 is only illustrated for reference, and when the support plate 210 is actually viewed from the outside, only the wholly flat main body 210a is visible, and the spacer 240 is located inside and thus is not visible.

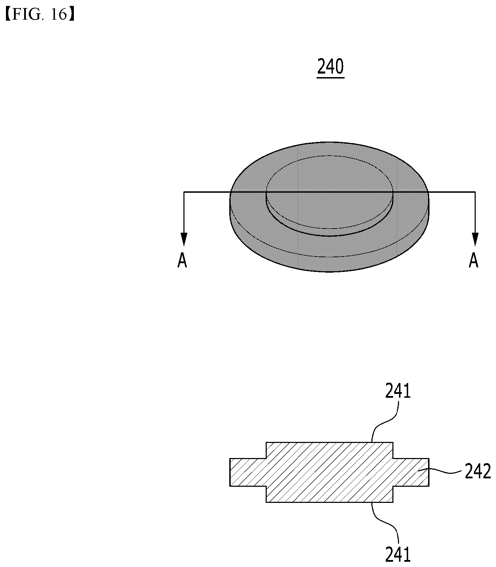

In the embodiment of FIG. 15, the spacer mounting part 211-1 of the main body 210a has a concave step, unlike the case shown in FIG. 14 which has an open shape. A spacer 240 is disposed within each spacer mounting part 211-1 of the pair of plate members 210a-1 and 210a-2. For other overlapping matters regarding the spacer 240 and the main body 210a, refer to the details described above with reference to FIGS. 12 to 14. FIG. 16 shows a cross section along line A-A of the spacer of FIGS. 12 and 14. As described above, a separation preventive part 242 protruding from the side surface of the spacer 240 is provided.

FIG. 17 shows another modified embodiment of the spacer of FIGS. 12 and 14. For convenience of explanation, in FIG. 17, it is illustrated as a cross-sectional view so that the spacer can be understood by comparison with the cross-sectional views of FIGS. 12 and 14 in FIG. 16. The spacer in FIG. 17 has a concave shape in which the separation preventive part 242 recesses inward from the side surface of the spacer 240. When manufacturing the support plate 210 of the blocking member 200 using the spacer 240 in this case, it is advantageous to manufacture the spacer 240 and the main body 210a integrally.

FIG. 18 shows another modified embodiment of the spacer 240 of FIGS. 12 to 15.

The spacer 240 may have a square cross section. The case of (a) on the left side illustrates a case where the separation preventive part241 is not applied, and the case of (b) on the right side illustrates a case where the separation preventive part 241 is applied.

Meanwhile, for other descriptions of the blocking member 200 of FIGS. 11 to 18, refer to the details described above regarding the blocking member 200 of FIGS. 3 to 10.

According to the blocking member 800 described above in FIGS. 3 to 18, since the spacer 240 of a metal material is disposed through the plastic main body 210a or inside the main body 210a, the manufacturing cost can be remarkably reduced as compared to the case where the support plate 210 is manufactured only from metal materials. On the other hand, since the spacer 240 is made of a metal material, it can absorb heat generated from the battery cell 110 during a thermal event of the battery cell 110 to lower the temperature of the battery cell 110. In addition, since the spacer 240 maintains its shape and structure even at high temperatures, the separation distance between the battery cells 110 can be maintained by the spacer 240 even if the main body 210a is partially melted at high temperature.

Furthermore, according to the present disclosure, even if the spacer 240 is disposed, both surface of the main body 210a including the spacer 240 (both surfaces facing the battery cell 110) are flat as a whole, and therefore, even when the main body 210a is coupled with the swelling pad 220 and/or the swelling pad 230, the coupling property is increased. In addition, it prevents continuous protrusion of the soft swelling pad 220 due to unnecessary protrusion of the spacer 240, so that when the blocking member 200 is disposed on the battery cell 110, it is also possible to prevent the outer surface of the battery cell 110 from unevenly pressing.

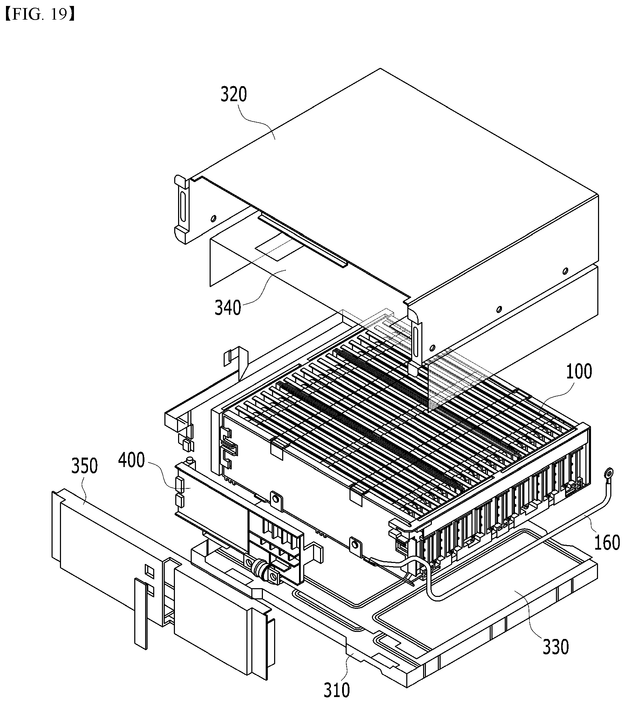

FIG. 19 is an exploded perspective view of a battery pack according to an embodiment of the present disclosure. The battery pack according to the embodiment of FIG. 19 largely includes a cell module assembly 100 of FIG. 1, a blocking member 200, a pack case 300, and a battery management system (BMS) 400.

Various types of cables such as the power cable 160 are connected to the cell module assembly 100. Since the other cell module assembly 100 and the blocking member 200 overlap with the contents set forth above, refer to those set forth above.

The pack case houses therein a cell module assembly 100, a blocking member 200, and a battery management system 400. The embodiment of FIG. 19 includes a lower case member 310 and an upper case member 320. The lower case member 310 and the upper case member 320 are combined to surround the outside of the cell module assembly 100. For example, the lower case member 310 may have a generally flat plate shape. For example, the upper case member 320 may have a U-shaped frame shape. The cell module assembly 100 may be seated on a flat plate-shaped lower case member 310, and the upper case member 320 may cover the cell module assembly 100.

However, the present disclosure is not limited to those described above, and can be changed and modified in various ways, for example, the lower case member 310 and the upper case member 320 may each be an L-shaped frame, and may also be a roll press type mono frame.

An insulating sheet 330 having electrical insulation properties is provided between the cell module assembly 100 and the lower case member 310. Further, an insulating sheet 340 having electrical insulation properties is provided between the cell module assembly 100 and the upper case member 320. The insulating sheet 330 and the insulating sheet 340 may be, for example, a film made of PC (polycarbonate), PET, PP, or a combination thereof.

When mounting the battery management system 400 on the front surface of the cell module assembly 100, the front surface between the upper case member 320 and the lower case member 310 may be further provided with a BMS cover 350 to cover the battery management system 400.

Meanwhile, in the above-mentioned embodiments, the case where the electrode leads 111 and 112 are provided on both sides of the battery cell 110, and a pair of busbar housings 130 are provided on both ends of the battery cell stack is explained as an example, but the present disclosure is not limited to those described above. All electrode leads 111 and 112 can be provided on one side of the battery cell 110, and the busbar housing 130 can be disposed at one end of the battery cell stack, that is, at one end toward which the electrode leads 111 and 112 face. That is, the description regarding the busbar housing 130, blocking member 200, the pack case 300, and the like is also applicable to the latter case.

The battery pack according to the present disclosure may further include various other components included in the battery pack, in addition to the above-mentioned components. For example, the battery pack according to the present disclosure may include various electrical components for controlling or managing the charge and discharge of the battery pack, such as a battery management system (BMS), relays, fuses, and current sensors.

An energy storage system (ESS) according to the present disclosure includes one or more battery packs according to the present disclosure as described above. Further, the energy storage device according to the present disclosure may further include common components included in energy storage devices in addition to the battery pack.

While the present disclosure has been described in detail with reference to specific embodiments and illustrative drawings, the present disclosure is not limited thereto, and it will be apparent to those skilled in the art that various changes and modifications can be made within the spirit and scope of the disclosure as defined by the appended claims.

### [Description of Reference Numerals]

100: cell module assembly
110: battery cell
111: electrode lead
112: electrode lead
120: end plate
130: busbar housing
140: strap
150: busbar
200: blocking member
210: support plate
210a: main body
211, 211-1: spacer mounting part
220: swelling pad
230: swelling pad
240: spacer
240a: subframe
240-1: first bar member
240-2: second bar member
242: separation preventive part
300: pack case
310: lower case member
320: upper case member
330: insulating sheet
340: insulating sheet
350: BMS cover
400: battery management system

## Claims

1. A cell module assembly comprising:
a battery cell stack in which a plurality of battery cells are stacked; and
a blocking member disposed between at least one of the plurality of battery cells and at least another one of them,
wherein the blocking member comprises a support plate, and the support plate includes a main body and a spacer coupled to the main body, and
wherein the spacer has a higher melting point than the main body so as to maintain a shape and structure during a battery cell thermal event.

2. The cell module assembly of claim 1, wherein:
the main body is made of a plastic material, and
the spacer is made of a metal material.

3. The cell module assembly of claim 1, wherein:
the spacer has a frame structure, and
the frame includes a plurality of subframes.

4. The cell module assembly of claim 3, wherein:
each of the plurality of subframes has the same shape and structure, and is disposed along a large area of the blocking member.

5. The cell module assembly of claim 1, wherein:
each of the plurality of subframes has a rectangular or square border shape so that the spacer has a lattice structure.

6. The cell module assembly of claim 1, wherein:
each of the plurality of subframes has a regular hexagonal border shape of the same size so that the spacer has a honeycomb structure.

7. The cell module assembly of claim 1, wherein:
the spacer comprises a plurality of first bar members disposed along one direction, and a plurality of second bar members disposed so as to intersect with the first bar member.

8. The cell module assembly of claim 7, wherein:
the first bar member and the second bar member are orthogonal to each other.

9. The cell module assembly of claim 7, wherein:
each of the plurality of first bar members is disposed so as to be spaced apart from each other at a first predetermined equal interval, and
each of the plurality of second bar members is disposed so as to be spaced apart from each other at a second predetermined equal interval.

10. The cell module assembly of claim 7, wherein:
the spacer is manufactured by welding and joining the first bar member and the second bar member.

11. The cell module assembly of claim 1, wherein:
a plurality of the spacers are provided, and are spaced apart by a predetermined distance along at least one direction of the support plate to form a dot array.

12. The cell module assembly of claim 11, wherein:
the spacer has a circular or square plate shape.

13. The cell module assembly of claim 1, wherein:
the spacer is manufactured integrally using a casting manufacturing method.

14. The cell module assembly of claim 1, wherein:
the spacer is exposed to the outside on one or both sides of the outer surface of the support plate facing the battery cell, and
one or both surfaces where the main body and the spacer are coupled are flat without having a step.

15. The cell module assembly of claim 1, wherein:
the spacer comprises a separation preventive part which is disposed inside the support plate, and
the separation preventive part has a convex shape which protrudes outward from the side surface or has a concave shape which recesses inward from the side surface.

16. The cell module assembly of claim 1, wherein:
the spacer is inserted inside the main body, and is not exposed on the surface of the support plate.

17. The cell module assembly of claim 1, wherein:
the main body and the spacer are manufactured integrally, and
are manufactured by placing the spacer and then injection-molding the main body.

18. The cell module assembly of claim 1, wherein:
the main body and the spacer are manufactured separately and assembled, and
the main body comprises a pair of plate members, wherein the spacer is placed on one of the pair of plate members, and then the other one of the pair of plate members is coupled.

19. The cell module assembly of claim 18, wherein:
the pair of plate members each constitute half of the main body, when viewed from a side end part of the support plate, and
each of the pair of plate members is formed with a spacer mounting part, wherein the spacer mounting parts are spaced apart from each other by a predetermined distance along at least one direction of the support plate to form spacer mounting parts arrayed in a dotted manner.

20. The cell module assembly of claim 19, wherein:
the spacer mounting part has an open shape, and the spacer is exposed to the outside of the support plate,
the spacer mounting part has a mounting step on which a separation preventive part of the spacer is mounted around the opening, and the mounting step is formed on a surface where each of the pair of plate members faces each other.

21. The cell module assembly of claim 19, wherein:
the spacer mounting part has a concave shape, and is formed on a surface where each of the pair of plate members faces each other, and the spacer is inserted into the interior of the support plate.

22. The cell module assembly of claim 18, wherein:
each of the pair of plate members has a coupling member on a side surface,
a female type coupling member is disposed on one of the pair of plate members, and a male type coupling member is disposed on the other of the pair of plate members.

23. The cell module assembly of claim 22, wherein:
the coupling member is hook-coupled.

24. The cell module assembly of claim 18, wherein:
each of the pair of plate members has a guide member at a corner,
a female type guide member is disposed on one of the pair of plate members, and a male type guide member is disposed on the other of the pair of plate members.

25. The cell module assembly of claim 24, wherein:
the female type guide member is an L-shaped concave part formed along a corner of the plate member, and the male type guide member is an L-shaped convex part formed along a corner of the plate member.

26. The cell module assembly of claim 1, wherein:
the blocking member further comprises a pair of swelling pads each provided on both surfaces of the main body.

27. The cell module assembly of claim 1, wherein:
the blocking member is provided with a plurality of main bodies, and further comprises swelling pads disposed between the main bodies.

28. The cell module assembly of claim 1, further comprising:
a pair of busbar housings that include openings through which electrode leads of the battery cells pass, and are disposed on both side surfaces of the battery cell stack; and
a pair of end plates that respectively connect both ends of the pair of busbar housings.

29. A battery pack comprising:
the cell module assembly of claim 28; and
a pack case that houses the cell module assembly inside.

30. An energy storage system comprising the battery pack of claim 29.
